# EUROPÄISCHE PATENTANMELDUNG

(11) **EP 1 629 879 A1**
(43) Veröffentlichungstag der Anmeldung: **01.03.2006**
(21) Anmeldenummer: 05013737.1
(22) Anmeldetag: 25.06.2005
(51) Int. Cl.: B01D 37/02, B01D 15/00, A23L 2/80, C12H 1/04

(54) **Vorrichtung und Verfahren zur Adsorption von Trubstoffen**

(30) Priorität: 27.08.2004 DE 102004041528
(71) Anmelder: M-Kit GbR, 47139 Duisburg (DE)
(72) Erfinder: Meier, Josef, 9032 Engelburg (CH)
(74) Vertreter: Stenger, Watzke & Ring

(57) **Zusammenfassung**

Die vorliegende Erfindung betrifft eine Vorrichtung sowie ein Verfahren zur Adsorption von Bestandteilen einer Flüssigkeit, insbesondere von Trubstoffen wie Proteinen oder polyphenolischen Verbindungen, mittels regenerierbarer Adsorptionsmittel, wobei die Vorrichtung durch einen Volumenkörper und einen Käfig gekennzeichnet ist, wobei der Volumenkörper die Flüssigkeit und den Käfig aufnimmt und der Käfig das Adsorptionsmittel aufnimmt, wobei mindestens eine Wand des Käfigs flüssigkeitsdurchlässig ausgebildet ist und ein Inkontaktbringen der Flüssigkeiten dem Adsorptionsmittel mit ermöglicht. Verfahrensseitig betrifft die Erfindung ein Verfahren, welches dadurch gekennzeichnet ist, daß zur Adsorption der Bestandteile aus der Flüssigkeit diese in eine Vorrichtung angebracht wird, aufweisend einen Volumenkörper und einen Käfig, wobei der Volumenkörper die Flüssigkeit und den Käfig aufnimmt und der Käfig das Adsorptionsmittel aufnimmt, wobei mindestens eine Wand des Käfigs flüssigkeitsdurchlässig ausgebildet ist und ein Inkontaktbringen der Flüssigkeit mit dem Adsorptionsmittel ermöglicht, und die Flüssigkeit mit dem im Käfig befindlichen Adsorptionsmittel in Kontakt gebracht wird.

## Beschreibung

Die vorliegende Erfindung betrifft eine Vorrichtung zur Adsorption von Bestandteilen einer Flüssigkeit, insbesondere von Trubstoffen wie Proteinen oder polyphenolischen Verbindungen, mittels regenerierbarer Adsorptionsmittel. Insbesondere betrifft die Erfindung eine Vorrichtung und ein Verfahren für die Anwendung in der Getränke- und/oder artverwandten Industrie.

Proteine und Polyphenole, wie zum Beispiel Anthocyanogene sind potentielle Trübungsbildner in Getränken. Sie beeinträchtigen die Haltbarkeit von Produkten insbesondere durch die Bildung von starken Trübungen, welche im Markt zu einer Rücknahme der Produkte führen können.

Die Möglichkeiten der Stabilisierung von beispielsweise Bier oder Wein sind vielfältig. Überblickt man die Möglichkeiten zur Verbesserung der sogenannten kolloidalen Stabilität, erscheint eine gerbstoffseitige Behandlung der Produkte am geeignetsten. Die Adsorption von Polyphenolen an Polyamid ist heute unter dem Begriff PVPP-Stabilisierung bekannt.

Darüber hinaus sind weitere Methoden zur Stabilisierung von Produkten der Getränkeindustrie wie z. B. die Sedimentation der kolloidalen Trubstoffe, die mechanische Trennung der gröberen Trubpartikel oder die chemische Einflußnahme bekannt.

Ab dem Zeitpunkt der Lagerung von Getränken ist es vor allem der Einsatz von Bentonit, Kieselgel, Sol und Tannin, die eine bessere oder raschere Bildung und Sedimentation von Trubstoffen bewirken. Diese Stabilisierungs- und Fällungsmittel zielen je nach Produkt gleichzeitig auf die Verbesserung der Filtrierbarkeit und bewirken eine erste oder vollständige Stabilisierung. Hier werden je nach Affinität zum Fällungsmittel oder der elektrischen Ladung auch Kolloide oder molekulare Stoffe gefällt.

Ein Nachteil dieser Stabilisierungsmethoden liegt in einem Produktverlust größer 2%. Darüber hinaus bilden diese Mittel mit kolloidalen und molekularen Stoffen Konglomerate, deren Eintritt in das Filtriersystem der Produktionsanlagen verhindert werden muß. Ein Eindringen dieser Trubsedimente in das Filtrationssystem verstopft in kürzester Zeit die Filter.

Die Trübungsbildner und Trubstoffe besitzen eine hohe Komplexität. Aus dem breiten Spektrum von groben Dispersionen (> 0,1 µm), Kolloiden (zwischen 0,001 und 0,1 µm) und den molekular dispersen Stoffen (< 0,001 µm) müssen einige aus den Produkten vollständig, andere nur selektiv entfernt werden. Hierzu sind unterschiedliche Technologien aus dem Stand der Technik bekannt. So wird beispielsweise die Kieselgurfiltration zur Abtrennung von Hefen und einem großen Teil anderer Trübungsbildner eingesetzt, jedoch gelingt mittels dieser nicht die Abtrennung von weiteren Bakterien und Fraktionen potentieller Trubstoffe wie Eiweiße und Polyphenole.

Durch Zusatz von Aktivkohle, Cellulose und Stabilisierungsmitteln vor oder direkt bei der Filtration kann die Leistungsfähigkeit der Kieselgurfiltration erhöht werden. Nachteilig bleibt festzustellen, daß auch hier sowohl Produktverluste als auch der Verlust des Filtrationsmittels hinzunehmen ist. Zudem wird wegen wachsendem Trubkuchen die Kontaktzeit des Produktes mit den Stabilisierungsmitteln immer kleiner und der Stabilisierungseffekt nimmt ab.

Ein weiteres Verfahren zur Aufbereitung von Produkten ist das bereits erwähnte PVPP-Verfahren, wobei PVPP für Polyvinylpolypyrrolidon steht. Hierbei handelt es sich um regenerierbare Kunststoffe. Dieses Verfahren ist bereits seit den 1970-er Jahren bekannt. Die vorfiltrierten Produkte werden mit einer Suspension, welche 10 bis 50 g/hl PVPP oder ähnliche Kunststoffe enthält, versetzt und anschließend filtriert. Die Kontaktzeit des Produktes mit dem Kunststoff ergibt sich in Abhängigkeit des Flüssigkeitsvolumens des eingesetzten Filters. Je kleiner die Kontaktzeit sein soll, desto mehr Kunststoff muß eingesetzt werden und desto größer müssen die eingesetzten Filter und Geräte sein.

Nach Beendigung des Stabilisiervorgangs wird der jeweilige Filterinhalt verdrängt oder mittels Kohlendioxid leer gedrückt. Im Filter verbleibt der mit Trubstoffen angereicherte Kunststoff. In einem anschließenden Regenerationsvorgang wird der Kunststoff durch Spülen mit heißer Natronlauge, Neutralisieren mit heißer Säure und anschließendem Spülen mit Wasser regeneriert.

Nach Abschluß des Regenerationsprozesses kann der Kunststoff wieder in den sogenannten Stapelbehälter zurückgeführt werden.

Die regenerierbaren Kunststoffe sind in der Regel sehr teuer, so daß ein Schwund dieses Materials unbedingt vermieden werden muß.

In der Praxis wird der Kunststoff aus dem Stapeltank einem Volumenstrom des Produktes zudosiert und der mit dem Kunststoff versetzte Volumenstrom einer Filtrationseinheit zugeführt. In der Filtrationseinheit wird der Kunststoff abgetrennt und kann anschließend der Regenerierung zugeführt werden. Ein solches Verfahren entfernt jedoch nur einen Teil der Trubstoffe aus dem Produkt und ist nicht geeignet alle Trubstoffe zu entfernen. Darüber hinaus ist der apparative Aufwand groß und die Baugröße insbesondere der Filteranlage in Abhängigkeit des zu filtrierenden Volumenstroms sehr platzraubend. Darüber hinaus besitzt das Kunststoffmaterial auch keine optimalen Anschwemmeigenschaften und es müssen anlagenseitig spezielle Strömungsmaßnahmen beachtet werden. Des Weiteren ist eine Vorrichtung zur Austragung des Kunststoffmaterials auf der Filtereinheit notwendig. Der Vorratsbehälter (Stapeltank) für die einzusetzende Kunststoffsuspension muß zur Einhaltung der notwendigen Hygiene mit einer Erhitzervorrichtung zur Sterilisation ausgerüstet sein, welche einen hohen Energiebedarf hat.

Des Weiteren kann ein solches Verfahren nicht in kontinuierlicher Weise betrieben werden, sondern bedarf der satzweisen Behandlung des Volumenstroms sowie der satzweisen Regenerierung des Kunststoffmaterials.

Unter Berücksichtigung des zuvor Ausgeführten liegt der Erfindung die Aufgabe zugrunde, ein Verfahren sowie eine Vorrichtung zur Adsorption von Bestandteilen einer Flüssigkeit, insbesondere von Trubstoffen wie Proteinen oder polyaromatischen Verbindungen, mittels regenerierbarer Adsorptionsmittel zur Verfügung zu stellen, welche die auf dem Stand der Technik bekannten Nachteile überwindet und eine kompaktere Bauweise der Behandlungsanlage ermöglicht.

Gelöst wird diese Aufgabe hinsichtlich der Vorrichtung durch eine Vorrichtung, welche durch einen Volumenkörper und einen Käfig gekennzeichnet ist, wobei der Volumenkörper die Flüssigkeit und den Käfig aufnimmt und der Käfig das Adsorptionsmittel aufnimmt, wobei dieser ein Inkontaktbringen der Flüssigkeit mit dem Adsorptionsmittel ermöglicht.

Verfahrensseitig wird die Aufgabe durch ein Verfahren zur Adsorption von Bestandteilen einer Flüssigkeit, insbesondere von Trubstoffen wie Proteinen oder polyphenolischen Verbindungen, mittels regenerierbarer Adsorptionsmittel gelöst, welches dadurch gekennzeichnet ist, daß zur Adsorption der Bestandteile aus der Flüssigkeit diese in eine Vorrichtung eingebracht wird, aufweisend einen Käfig, wobei der Volumenkörper die Flüssigkeit und den Käfig aufnimmt und der Käfig das Adsorptionsmittel aufnimmt, wobei dieser ein Inkontaktbringen der Flüssigkeit mit dem Adsorptionsmittel ermöglicht und die Flüssigkeit mit dem im Käfig befindlichen Adsorptionsmittel in Kontakt gebracht wird.

Die Wand des Käfigs ist erfindungsgemäß flüssigkeitsdurchlässig ausgebildet. Vorteilhafter Weise ist die Wand in Form eines Siebes ausgebildet, wobei die Maschenweiten der Siebe kleiner der minimalen Komgröße des Adsorptionsmittels sind, wodurch ein Austreten des Adsorptionsmittels aus dem Käfig verhindert wird.

Der den Käfig aufnehmende Volumenkörper besitzt ein um ca. 5 bis 20% größeres Volumen als der Käfig, so daß die Flüssigkeit an den Käfigwänden vorbei durch den Volumenkörper strömen kann. Hierdurch bildet sich an der Käfigwand eine Konvektionszone zwischen Adsorptionsmittel und zu behandelnder Flüssigkeit aus.

In einer weiteren Ausführungsform der Erfindung kann die Wand des Käfigs in Form mehrerer übereinander gelagerter Gewebe unterschiedlicher Maschenweite ausgebildet sein. Hierbei nimmt die Maschenweite der Gewebe in Richtung der Wandstärke von innen nach außen zu und bis zu 6 Gewebelagen werden übereinander gelegt. Die Maschenweite liegt erfindungsgemäß zwischen ungefähr 10 und 40 µm. Eine solche Maschenweite ermöglicht das ungehinderte Einströmen der Flüssigkeit in die Konvektionszone und hält das Adsorptionsmittel innerhalb des Käfigs gefangen.

In einer weiteren Ausführung weist der Volumenkörper in Strömungsrichtung der Flüssigkeit im Raum zwischen Volumenkörperwand und Käfig eine strömungstechnische Barriere auf, durch welche die Flüssigkeit beim Durchströmen des Raums zwischen Volumenkörperwand und Käfig zwangsweise in den Käfig geleitet wird. Diese Barriere kann sich an jeder Stelle in Längsausdehnung des Volumenkörpers befinden, bevorzugt in etwa der Mitte der Längsausdehnung. Erfindungsgemäß ist dabei eine wechselnde Durchströmung des Käfigs vom unteren zum oberen Teil des getrennten Volumenkörpers und umgekehrt möglich, so dass sich kein oder nur wenig Material in der ständig bewegten Suspension am Siebkörper ablagem kann.

Zur Befüllung mit Adsorptionsmittel verfügt der Käfig über eine verschließbare Einfüllöffnung.

Das Adsorptionsmittel innerhalb des Käfigs wird erfindungsgemäß umgewälzt, um eine gleichmäßige Inkontaktbringung des Adsorptionsmittels mit der zu behandelnden, respektive sich im Käfig befindlichen Flüssigkeit zu gewährleisten. Ein Mischungsverhältnis des Adsorptionsmittel und der im Käfig befindlichen zu behandelnden Flüssigkeit von 1 : 6 bis 1 : 12 ist vorteilhaft. Die Umwälzung der im Käfig befindlichen Suspension kann durch einen Pumpenkreislauf erfolgen. Hierbei weist der Käfig einen Ablauf zum Ansaugen des Adsorptionsmittels, eine Pumpe und einen Zulauf zum Einbringen des Adsorptionsmittels durch die Pumpe auf.

Vorteilhafter Weise befinden sich Ablauf und Zulauf an den sich gegenüberliegenden Stimseiten des Käfigs.

Alternativ kann das Adsorptionsmittel innerhalb des Käfigs mit Hilfe einer Förderschnecke oder eines Kolbens umgewälzt werden. Eine Förderschnecke kann erfindungsgemäß durch einen Motor angetrieben werden, wobei der Motor zur besseren Umwälzung des Mediums mit wechselnder Drehzahl betrieben werden kann. Die Förderschnecke weist erfindungsgemäß einen Steigungswinkel zwischen ungefähr 10 und 28° und einen Durchmesser von 50 bis 90% des Käfigdurchmessers auf.

Vorteilhafterweise sind der Käfig und der den Käfig umgebende Volumenkörper zylinderförmig ausgebildet. Der zylinderförmige Volumenkörper weist an den sich gegenüberliegenden Stimseiten Zuläufe und Abläufe für die Flüssigkeit auf. Darüber hinaus kann der zylinderförmige Volumenkörper erfindungsgemäß längsseitig Ausläufe zur Entnahme der Flüssigkeit aufweisen. Die bevorzugt in etwa der Mitte angeordnete Trennwand unterteilt erfindungsgemäß den Volumenkörper in zwei dichte Hälfte, so daß die zu stabilisierende Flüssigkeit durch den Käfigsiebkörper einströmen und zwangsweise in die andere Kesselhälfte ausströmen muss.

Zur Regenerierung des Adsorptionsmittels weist die Vorrichtung einen Zulauf und einen Ablauf für ein Regenerierungsmittel auf. Im Falle von Kunststoffmaterialien wie Polyamiden, insbesondere wie PVPP, sind die geeigneten Regenerierungsmittel die aus dem Stand der Technik bekannten heißen Säuren, Laugen sowie heißes und/oder entgastes Wasser.

Verfahrensseitig wird das Adsorptionsmittel vorteilhafter Weise in Form eines Kunststoffgranulates eingesetzt. Das Kunststoffgranulat wird innerhalb des Käfigs mit den vorrichtungsseitig zur Verfügung gestellten Mitteln umgewälzt. Das beladene Adsorptionsmittel kann mittels Säure und/oder Base, Heißwasser und/oder entgasten Wasser regeneriert werden.

Vorteilhafter Weise werden erfindungsgemäß in einem Verfahren zwei Vorrichtungen parallel betrieben, wobei die eine Vorrichtung im Adsorptionsmodus betrieben wird und die zweite Vorrichtung im Regenerierungsmodus betrieben wird. Hierdurch ist eine kontinuierliche Betriebsweise des Verfahrens möglich.

Gemäß einem weiteren Merkmal der Erfindung kann vorgesehen sein, daß im Zuge der Verfahrensdurchführung der Flüssigkeitsvolumenstrom gemessen und die erfaßten Meßwerte mit vorgebbaren Sollwerten verglichen werden. Die auf diese Weise ermittelten Vergleichswerte lassen in vorteilhafter Weise einen Rückschluß auf den Absorptionsgrad des Absorptionsmittels zu. Wird dabei ein solcher Absorptionsgrad ermittelt, der im Weiteren eine bestimmungsgemäße Absorption der Flüssigkeitsbestandteile nicht mehr bestimmungsgemäß zuläßt, so kann automatisch eine Regenerierung des Absorptionsmaterials eingeleitet werden. Die Ermittlung des Absorptionsgrades ist insbesondere dann von Vorteil, wenn das erfindungsgemäße Verfahren in zwei parallel betriebenen Vorrichtungen durchgeführt wird, wobei die eine Vorrichtung im Absorptionsmodus und die andere Vorrichtung im Regenerierungsmodus betrieben wird. Wird nämlich bezüglich der Vorrichtung, die im Absorptionsmodus betrieben wird, festgestellt, daß ein vorgebbarer Absorptionsgrad des Absorptionsmittels erreicht wird, so kann automatisch zwischen den beiden Vorrichtungen umgeschaltet werden, so daß die zuvor im Absorptionsmodus betriebene Vorrichtung in den Regenerierungsmodus umgeschaltet wird. Die andere Vorrichtung, die zuvor im Regenerierungsmodus betrieben wurde, wird dann in den Absorptionsmodus umgeschaltet. Ein kontinuierlicher Betrieb des erfindungsgemäßen Verfahrens kann so sichergestellt werden, denn wird in Abhängigkeit des ermittelten Absorptionsgrades automatisch zwischen den beiden parallel betriebenen Vorrichtungen hin- und hergeschaltet.

Der Flüssigkeitsvolumenstrom als Bypassmenge kann gemäß einem alternativen Vorschlag der Erfindung in Abhängigkeit der Förderleistung des Umpumpens gesteuert werden. Der Flüssigkeitsvolumenstrom kann auch als zwangsweise Durchsatzmenge durch den Siebkäfig mittels eines Regelventils gesteuert werden.

Die zur Ermittlung der Vergleichswerte vorzugebenden Sollwerte lassen sich gemäß einem weiteren Merkmal der Erfindung anhand einer empirisch ermittelten Vergleichskurve vorgeben. Diese Vergleichskurve kann im Speicher einer Rechnereinheit hinterlegt werden, wobei die Rechnereinheit auf Basis der hinterlegten Vergleichskurve und des ermittelten Flüssigkeitsvolumenstroms eine Vergleichsrechnung automatisch vornimmt. Die auf diese Weise berechneten Vergleichswerte können für eine weitere Auswertung ebenfalls gespeichert werden. Bei der zwangsweisen Durchströmung des Siebkörpers kann in Relation der beinhalteten Menge Adsorptionsmaterial zur durchströmten Menge Flüssigkeit pro Zeiteinheit eine genaue Verhältnisrechnung erstellt werden.

Gemäß einem weiteren Merkmal der Erfindung können die Siebe des Käfigs durch Flußumkehrung des Flüssigkeitsvolumenstroms freigespült, das heißt, kontinuierlich während des Prozesses gereinigt werden. Durch die Zweiteilung des Volumenkörpers kann in festlegbaren Abständen eine Umkehrung der Strömungsrichtung erfolgen. Diese Verfahrensweise erlaubt in vorteilhafter Weise ein Durchströmen der mit Adsorptionsmittel angereicherte Suspension ohne dass es zu einer Verstopfung des Käfigsiebkörpers kommt. Diese Verfahrensweise kann erfindungsgemäß sowohl während des Stabilisiervorganges, als auch während des Regeneriervorganges angewendet werden. Dabei werden die Siebe in "backflushartiger" Weise gereinigt, wobei aufgrund der gewählten Art und der Maschenweiten der Siebe sichergestellt ist, daß ein solches Freispülen, das heißt Reinigen der Siebe ohne Materialverlust durchgeführt wird.

### Figurenbeschreibung

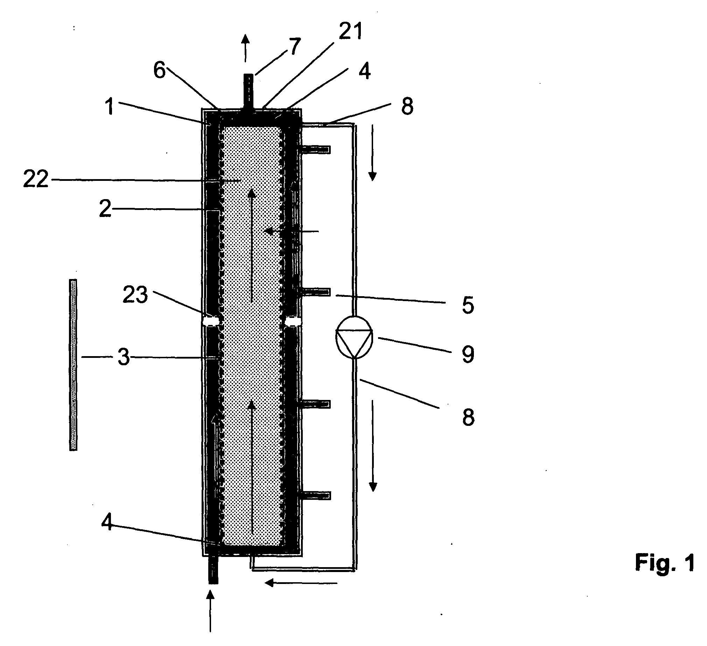

Fig. 1 zeigt beispielhaft eine erfindungsgemäße Vorrichtung, die als sogenanntes "Independent Reactive Stabilisation System", kurz "IRSS", bezeichnet werden kann. Sie weist einen Zylinder 21 und einen darin befindlichen Käfig 2 auf. Im Käfig befindet sich das Adsorptionsmittel 22. Über den Zu- bzw. Ablauf 7 gelangt die zu behandelnde Flüssigkeit in den Zylinder 21 und strömt an den Siebwänden 3 des Käfigs vorbei. Durch eine in etwa mittig angeordnete Trennwand 23 muss die außen einströmende Flüssigkeit zwangsweise in den Siebkörper eindringen und diesen oberhalb der Trennwand auslaufseitig verlassen. Das Adsorptionsmittel 22, welches über eine Einfüllöffnung 6 in den Käfig eingefüllt werden kann, wird mittels der Pumpe 9 über die Umwälzleitung 8 innerhalb des Käfigs umgewälzt. Der Zylinder 21 weist seitliche Auslässe 5 für die Flüssigkeit auf, um Teilströme entnehmen zu können.

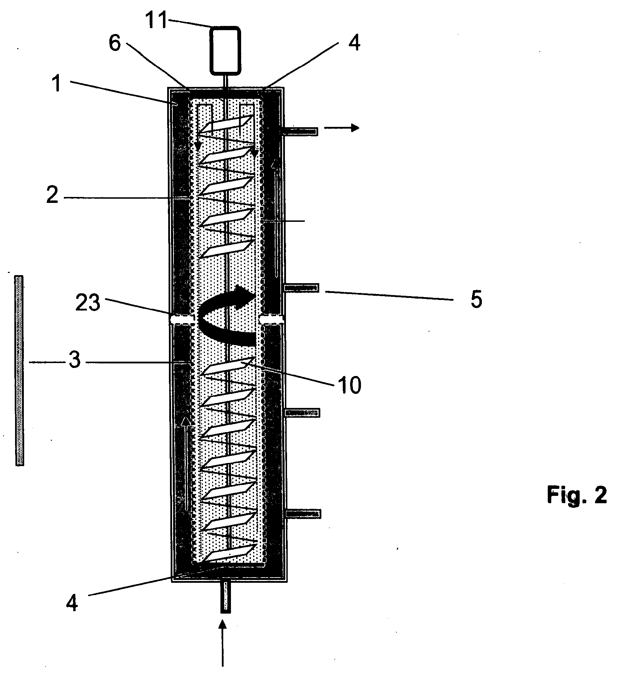

Fig. 2 zeigt eine alternative Ausführungsform der erfindungsgemäßen Vorrichtung, bei welcher das Adsorptionsmittel mit Hilfe einer Förderschnecke oder eines Rührwerkes 10 umgewälzt wird. Die Förderschnecke oder das Rührwerk 10 wird mittels des Motors 11 angetrieben.

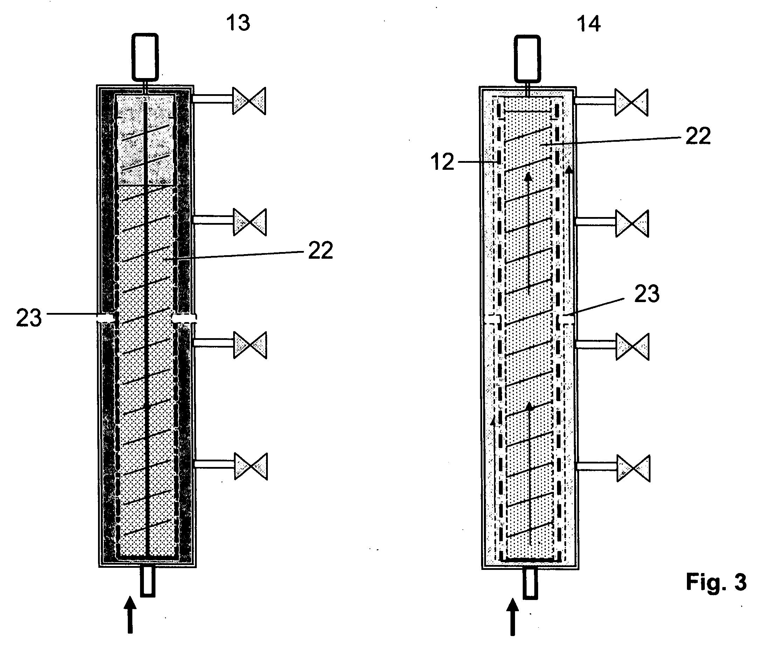

Fig. 3 zeigt das Adsorptionsmittel 22 einmal im Ruhezustand 13 und im Betrieb 14 innerhalb des Käfigs 2. An den Siebwänden 3 des Käfigs bildet sich eine Konvektionszone 12 aus, in welcher die Trubstoffe vom Adsorptionsmittel absorbiert werden. Durch die Trennwand 23 wird eine zwangsweise Durchströmung bewirkt.

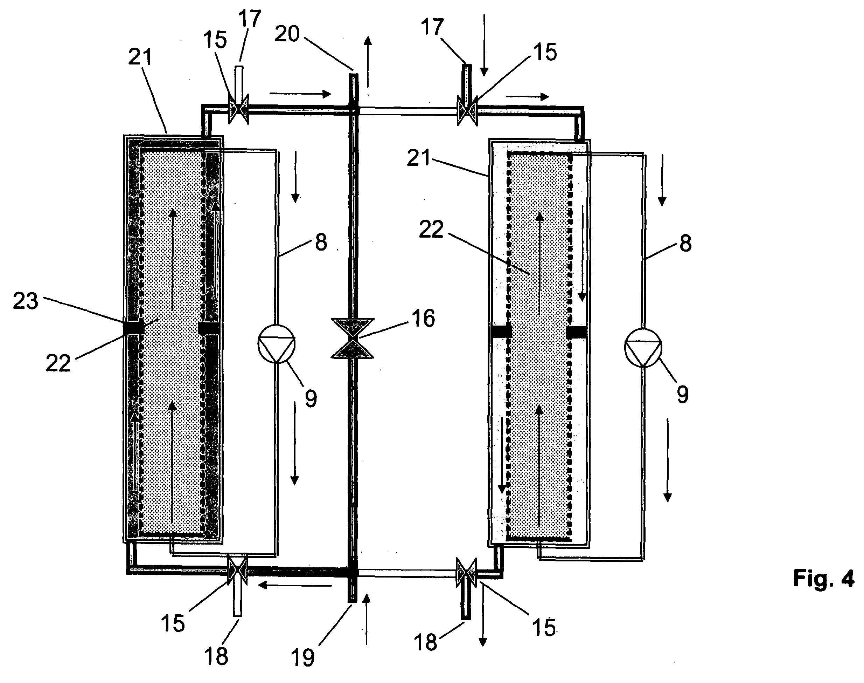

Fig. 4 zeigt eine erfindungsgemäße Anordnung bestehend aus zwei erfindungsgemäßen Vorrichtungen. In Fig. 4 befindet sich die linke Einheit im Adsorptionsmodus, während sich die rechte Einheit im Regenerationsmodus befindet. Das Regenerierungsmittel wird über den Zulauf 17 in die Vorrichtung eingebracht. Grundsätzlich ist die Anordnung der Ein- und Ausläufe für die Regeneration auch umgekehrt möglich. Die Volumenströme lassen sich mittels der Regelventile 15 steuern. Das Regenerierungsmittel strömt über den Auslauf 18 aus der Vorrichtung aus. Vorteilhafter Weise verfügt die Vorrichtung über ein BypaßVentil 16, mittels welchem sich der Volumenstrom der zu behandelnden Flüssigkeit unbehandelt durch die Vorrichtung führen läßt.

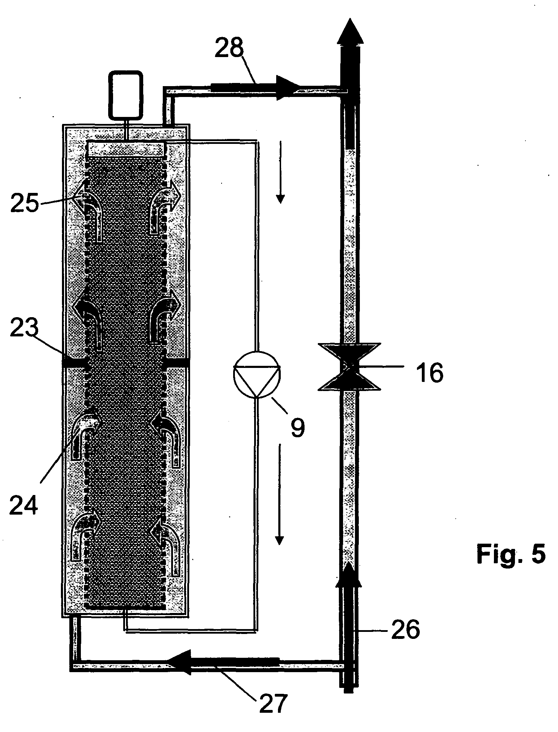

Fig. 5 zeigt die erfindungsgemäße Vorrichtung mit einer Trennplatte 23, welche den Volumenkörper trennt und das im Volumenkörper befindliche Medium zwingt, von der unteren Partie 24 in den unteren Siebkäfigraum einzuströmen und aus dem oberen Siebkäfigraum 25 auszuströmen, wobei es stabilisiert wird.

Aus dem noch unstabilisiert Mediumshauptstrom 26 fließt ein Teilstrom 27 in die erfindungsgemäße Vorrichtung zur Stabilisierung. Der stabilisierte Teilstrom 28, vereinigt sich nach dem Verlassen der oberen Käfighälfte wieder mit dem Hauptstrom 28. Mittels des Regelventils 16 lässt sich der Stabilisierungsgrad des Hauptstroms einstellen. Während des ganzen Prozesses wird das Stabilisiermedium im Siebkäfig umgewälzt oder gerührt, wodurch eine kontinuierliche Kontaktierung des zu stabilisierenden Mediums mit dem Adsorptionsmittel erfolgt.

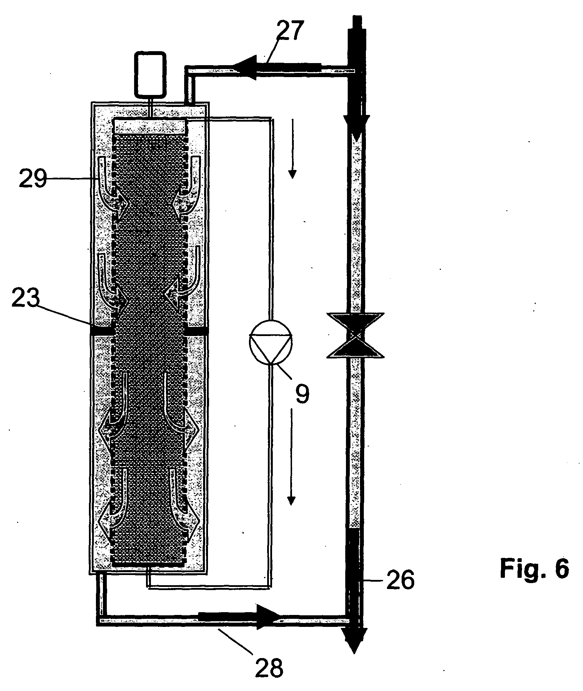

Fig.6 zeigt die "Umkehrsituation" des Stabilisiervorganges. In diesem Fall - durch entsprechende Ventilschaltungen des Hauptstromes 26 - strömt nun der zu stabilisierende Teilstrom 27 durch die Wegführung 31 in den Siebkörper ein, um durch die Trennwand zwangsweise dann in den unteren Volumenkörper auszuströmen. Der stabilisierte Teilstrom 28 mischt sich wieder mit dem Hauptstrom 26, usw.

Die Strömungsumkehrung hat zur Folge, dass sich am Siebkörperinnenteil abgelagertes Adsorptionsmittel beim Strömungsrichtungswechsel von der anderen Seite zwangsweise angeströmt und frei gespült wird. Diese Verfahrensführung kann auch beim Regeneriervorgang zu nutze machen.

### Bezugszeichenliste

- 1: zu behandelnde Flüssigkeit
- 2: Käfig
- 3: Siebwände des Käfigs
- 4: Stimseiten des Käfigs
- 5: Seitenauslässe
- 6: Einfüllöffnung
- 7: Zu-/Ablauf für Flüssigkeit
- 8: Umwälzleitung
- 9: Pumpe
- 10: Förderschnecke
- 11: Motor
- 12: Konvektionszone
- 13: Vorrichtung im Ruhezustand
- 14: Vorrichtung im Betrieb
- 15: Ventile
- 16: Bypaß
- 17: Zulauf-Regenerierungsmittel
- 18: Ablauf-Regenerirungsmittel
- 19: Zulauf zu behandelnde Flüssigkeit
- 20: Ablauf zu behandelnde Flüssigkeit
- 21: Zylinder
- 22: Adsorptionsmittel
- 23: Trennwand
- 24: Strömungsrichtung "unbehandeltes Medium fließt in unteren Siebkäfigraum"
- 25: Strömungsrichtung "behandeltes Medium fließt aus oberem Siebkäfigraum"
- 26: Mediumshauptstrom unbehandelt
- 27: Teilstrom unbehandeltes Medium im unteren Einlaufbereich
- 28: Teilstrom behandeltes Medium im oberen Auslaufbereich
- 29: Teilstrom unbehandeltes Medium im oberen Einlaufbereich

## Patentansprüche

1. Vorrichtung zur Adsorption von Bestandteilen einer Flüssigkeit, insbesondere von Trubstoffen wie Proteinen oder polyphenolischen Verbindungen, mittels regenerierbarer Adsorptionsmittel, **gekennzeichnet durch** einen Volumenkörper und einen Käfig, wobei der Volumenkörper die Flüssigkeit und den Käfig aufnimmt und der Käfig das Adsorptionsmittel aufnimmt, wobei mindestens eine Wand des Käfigs flüssigkeitsdurchlässig ausgebildet ist und ein Inkontaktbringen der Flüssigkeit mit dem Adsorptionsmittel ermöglicht.

2. Vorrichtung nach Anspruch 1, **dadurch gekennzeichnet, daß** die Wand des Käfigs in Form eines Siebs ausgebildet ist.

3. Vorrichtung nach Anspruch 2, wobei die Maschenweiten des Siebes kleiner der minimalen Komgröße des Adsorptionsmittels sind.

4. Vorrichtung nach einem oder mehreren der vorherigen Ansprüche, **dadurch gekennzeichnet, daß** der den Käfig aufnehmende Volumenkörper ein um 5 - 20% größeres Volumen als der Käfig aufweist.

5. Vorrichtung nach einem oder mehreren der vorherigen Ansprüche, **dadurch gekennzeichnet, daß** die Wand des Käfigs in Form mehrerer übereinander gelagerter Gewebe unterschiedlicher Maschenweite ausgebildet ist.

6. Vorrichtung nach Anspruch 5, **dadurch gekennzeichnet, daß** die Maschenweite der Gewebe in Richtung der Wandstärke von Innen nach Außen zunimmt.

7. Vorrichtung nach einem oder beiden der Ansprüche 5 und 6, **dadurch gekennzeichnet, daß** die Wand aus bis zu 6 Gewebelagen gebildet ist.

8. Vorrichtung nach einem oder mehreren der vorherigen Ansprüche, **dadurch gekennzeichnet, daß** die Maschenweite zwischen 10 und 40µm liegt.

9. Vorrichtung nach einem oder mehreren der vorherigen Ansprüche, **dadurch gekennzeichnet, dass** das mehrlagige Gewebe innenseitig des Siebkörpers eine glatte, feinporige Oberfläche aufweist.

10. Vorrichtung nach einem oder mehreren der vorherigen Ansprüche, **gekennzeichnet durch** eine Trennwand im Raum zwischen Volumenkörper und Käfig, welche als strömungstechnische Barriere zu einem zwangsweisen Einströmen der Flüssigkeit in den mit Adsorptionsmittel gefüllten Käfig zwangsweise führt.

11. Vorrichtung nach einem oder mehreren der vorherigen Ansprüche, **gekennzeichnet durch** eine Vorrichtung zur wechselnde Durchströmung des Käfigs vom unteren zum oberen Teil des getrennten Volumenkörpers und umgekehrt.

12. Vorrichtung nach einem oder mehreren der vorherigen Ansprüche, **dadurch gekennzeichnet, daß** Käfig eine Einfüllöffnung für das Adsorptionsmittel aufweist.

13. Vorrichtung nach einem oder mehreren der vorherigen Ansprüche, **dadurch gekennzeichnet, daß** der Käfig eine Einrichtung zur Umwälzung des Adsorptionsmittels aufweist.

14. Vorrichtung nach Anspruch 13, **dadurch gekennzeichnet, daß** die Einrichtung zur Umwälzung aus einem Ablauf, einem Zulauf und einer Pumpe zum Fördern des Adsorptionsmittels gebildet ist.

15. Vorrichtung nach Anspruch 13, **dadurch gekennzeichnet, daß** die Einrichtung zur Umwälzung aus einer im Käfig befindlichen Förderschnecke oder einem Rührwerk gebildet ist.

16. Vorrichtung nach Anspruch 15, wobei die Förderschnecke oder Rührwerk mittels eines außerhalb des Volumenkörpers befindlichen Motors angetrieben ist.

17. Vorrichtung nach Anspruch 16, wobei der Motor mit wechselnder Drehzahl arbeitet.

18. Vorrichtung nach einem oder mehreren der Ansprüche 15 bis 17 **dadurch gekennzeichnet, daß** die Förderschnecke eine Steigungswinkel zwischen 10 und 28° aufweist.

19. Vorrichtung nach einem oder mehreren der Ansprüche 15 bis 18, **dadurch gekennzeichnet, daß** der Durchmesser der Förderschnecke 50 bis 95% des Durchmessers des Käfigs beträgt.

20. Vorrichtung nach Anspruch 13, **dadurch gekennzeichnet, daß** die Einrichtung zur Umwälzung aus einem Kolben gebildet wird, der sich innerhalb des Käfigs bewegt.

21. Vorrichtung nach einem oder mehreren der vorhergehenden Ansprüche, **dadurch gekennzeichnet, daß** der Volumenkörper und der Käfig in Form von Zylindern ausgebildet sind.

22. Vorrichtung nach Anspruch 21, **dadurch gekennzeichnet, daß** der zylinderförmige Volumenkörper stirnseitig sich gegenüberliegende Zuläufe und Abläufe aufweist.

23. Vorrichtung nach einem oder mehreren der Ansprüche 21 und 22, wobei der zylinderförmige Volumenkörper längsseitige Ausläufe für die Flüssigkeit aufweist.

24. Vorrichtung nach einem oder mehreren der vorhergehenden Ansprüche, **gekennzeichnet durch** eine Einrichtung zur Regenerierung des Adsorptionsmittels.

25. Vorrichtung nach Anspruch 24, **dadurch gekennzeichnet, daß** die Einrichtung aus einem Zulauf und einem Ablauf für ein in die Vorrichtung einbringbares und zur Regenerierung des Adsorptionsmittels geeignetes Regenerierungsmittel gebildet ist.

26. Verfahren zur Adsorption von Bestandteilen einer Flüssigkeit, insbesondere von Trubstoffen wie Proteinen oder polyphenolischen Verbindungen, mittels regenerierbarer Adsorptionsmittel, **dadurch gekennzeichnet, daß** zur Adsorption der Bestandteile aus der Flüssigkeit diese in eine Vorrichtung eingebracht wird, aufweisend einen Volumenkörper und einen Käfig, wobei der Volumenkörper die Flüssigkeit und den Käfig aufnimmt und der Käfig das Adsorptionsmittels aufnimmt, wobei mindestens eine Wand des Käfigs flüssigkeitsdurchlässig ausgebildet ist und ein Inkontaktbringen der Flüssigkeit mit dem Adsorptionsmittel ermöglicht, und die Flüssigkeit mit dem im Käfig befindlichen Adsorptionsmittel in Kontakt gebracht wird.

27. Verfahren zur Adsorption von Bestandteilen einer Flüssigkeit, **dadurch gekennzeichnet, dass** die Flüssigkeit mit dem im Käfig befindlichen Adsorptionsmittel mittels einer im Raum zwischen Volumenkörperwand und Käfig angeordneten strömungstechnischen Barriere zwangsweise in Kontakt gebracht wird.

28. Verfahren nach Anspruch 26, wobei das Adsorptionsmittel ein Kunststoff ist, vorzugsweise in Form eines Granulates.

29. Verfahren nach einem oder mehreren der Ansprüche 26 bis 28, **dadurch gekennzeichnet, daß** das Adsorptionsmittel innerhalb des Käfigs umgewälzt wird.

30. Verfahren nach Anspruch 29, wobei das Adsorptionsmittel durch eine Einrichtung bestehend aus einem Zulauf, einem Ablauf und einer Pumpe umgewälzt wird.

31. Verfahren nach Anspruch 29, wobei das Adsorptionsmittel durch eine Förderschnecke oder einen Kolben innerhalb des Käfigs umgewälzt wird.

32. Verfahren nach einem oder mehreren der Ansprüche 26 bis 31, wobei das Adsorptionsmittel innerhalb des Käfigs regeneriert wird.

33. Verfahren nach Anspruch 32, wobei das Adsorptionsmittel mittels einer konzentrierten Säure und/oder Base, Heißwasser und/oder entgastem Wasser regeneriert wird.

34. Verfahren nach einem oder mehreren der Ansprüche 29 bis 35 **dadurch gekennzeichnet, daß** das Verfahren in zwei parallel betriebenen Vorrichtungen durchgeführt wird, wobei in einer Vorrichtung die Adsorption der Bestandteile der Flüssigkeit stattfindet während das Adsorptionsmittel in der zweiten Vorrichtung regeneriert wird.

35. Verfahren nach einem der vorhergehenden Ansprüche 26 bis 34, **dadurch gekennzeichnet, daß** der Flüssigkeitsvolumenstrom gemessen und die erfaßten Meßwerte mit vorgebbaren Sollwerten zwecks Ermittlung des Absorptionsgrades des Absorptionsmittels verglichen werden.

36. Verfahren nach Anspruch 35, **dadurch gekennzeichnet, daß** der Flüssigkeitsvolumenstrom in Abhängigkeit der Förderleistung der Pumpe ermittelt wird.

37. Verfahren nach Anspruch 35, **dadurch gekennzeichnet, daß** der Flüssigkeitsvolumenstrom in Abhängigkeit der Schneckendrehzahl ermittelt wird.

38. Verfahren nach einem der Ansprüche 35 bis 37, **dadurch gekennzeichnet, daß** die Sollwerte anhand einer empirisch ermittelten Vergleichskurve vorgegeben werden.

39. Verfahren nach einem der vorhergehenden Ansprüche, **dadurch gekennzeichnet, daß** das Verfahren in zwei parallel betriebenen Vorrichtungen durchgeführt wird, wobei in einer Vorrichtung die Absorption der Bestandteile der Flüssigkeit stattfindet, während das Absorptionsmittel in der zweiten Vorrichtung regeneriert wird, wobei zwischen den beiden Vorrichtungen in Abhängigkeit des ermittelten Absorptionsgrades des Absorptionsmittels automatisch hin- und hergeschaltet wird.

40. Verfahren nach einem der vorhergehenden Ansprüche 26 bis 40 **dadurch gekennzeichnet, daß** die Siebe des Käfigs durch Umkehrung des Flüssigkeitsvolumenstromes freigespült werden.
